# FASCICULE DE BREVET EUROPEEN

(11) **EP 1 312 032 B1**
(45) Date de publication et mention de la délivrance du brevet: **04.10.2006**
(21) Numéro de dépôt: 01949171.1
(22) Date de dépôt: 17.07.2001
(51) Int. Cl.: G06K 7/00

(54) **LECTEUR A HAUTE SENSIBILITE POUR TRANSPONDEURS PASSIFS**
HOCHEMPFINDLICHER LESER FÜR PASSIVE TRANSPONDER
HIGH SENSITIVITY READER FOR PASSIVE TRANSPONDERS

(30) Priorité: 21.07.2000 FR 0009625
(43) Date de publication de la demande: 21.05.2003
(73) Titulaire: MBBS Holding SA, 2035 Corcelles (CH)
(72) Inventeur: BUI, Ngoc-Chau, CH-2046 Fontaines (CH); WERNER, Christian, CH-2025 Chez-le-Bart (CH); GAUDENZI, Yves, CH-2300 La Chaux-de-Fonds (CH); BENOIT, Martial, CH-2318 Brot-Plamboz (CH); CASSI, Vincent, CH-2314 La Sagne (CH); MIRUS, Christian, CH-2023 Gorgier (CH); CHATELAIN, Jean-Daniel, CH-1741 Cottens (CH); KOWALCZUK, Jaques, F-25370 Jougne (FR)
(74) Mandataire: GLN
(86) Numéro de dépôt international: PCT/CH2001/000445
(87) Numéro de publication internationale: WO 2002/009021

(56) Documents cités:
- WO-A-99/67736
- GB-A- 2 300 318

## Description

La présente invention se rapporte à un lecteur destiné à identifier des transpondeurs passifs du type comportant une antenne agencée pour recevoir un premier signal Tx du lecteur et pour émettre un deuxième signal Rx destiné au lecteur. Elle concerne plus particulièrement les lecteurs permettant la réception de signaux de faible intensité.

Les ensembles comportant un lecteur et au moins un transpondeur, et qui permettent une identification sans contact, sont bien connus de l'homme du métier. Ils sont basés sur le principe d'un couplage électromagnétique. L'un d'entre eux est, par exemple, décrit par EM Microelectronic - Marin SA (Suisse) sous le titre "CID Demokit Application note on transceiver Unit".

Un tel ensemble est aussi décrit dans le document GB-A-2 300 318.

Le lecteur de cet ensemble comporte une antenne et un circuit de commande qui émettent un signal Lx formé d'une porteuse à basse fréquence, typiquement comprise entre 9 et 150 kHz, modulée en amplitude. Ils reçoivent, en retour, le signal Rx.

Plus précisément, le lecteur est, en outre, muni d'une base de temps destinée à générer le signal de la porteuse, cette dernière étant modulée par le circuit de commande, ainsi que d'un démodulateur pour traiter les signaux captés et d'un microcontrôleur pour les décoder. Dans ce lecteur, un condensateur d'accord est relié à l'antenne pour former un circuit résonnant série, accordé sur la source de fréquence.

Le transpondeur reçoit du lecteur le signal Tx, qui correspond au signal Lx amorti et qui lui fournit, à la fois, l'énergie, les commandes et l'horloge.

Lorsque le lecteur a fini d'adresser ses commandes, il poursuit l'émission du signal de la porteuse, mais sans modulation. De la sorte, le transpondeur est constamment alimenté en énergie et piloté par l'horloge.

Le transpondeur adresse le signal Rx au lecteur, en court-circuitant périodiquement son antenne selon une modulation codée qui correspond à la réponse à donner.

Rx est reçu superposé à la porteuse par l'antenne du lecteur. Ce signal combiné est traité et décodé par le démodulateur.

Lorsque le lecteur est séparé du transpondeur par un écran métallique, le couplage électromagnétique ne se fait plus directement entre les deux antennes du lecteur et du transpondeur, mais indirectement, par l'écran métallique dans lequel circule des courants induits (courants de Foucault).

Le couplage entre l'antenne du lecteur et celle du transpondeur devient, alors, très faible. L'expérience a montré que, pour assurer une liaison dans de telles conditions, il est indispensable que l'énergie et la modulation soient transmises de manière particulièrement efficace, et que le démodulateur soit très sensible, capable de différencier des modulations des signaux Rx de l'ordre de 70 dB par rapport à la porteuse.

La présente invention a pour but de proposer un lecteur permettant de différencier d'aussi faibles modulations. A cet effet, le démodulateur, relié à l'antenne pour recevoir le deuxième signal, qu'elle capte provenant du transpondeur disposé dans le voisinage, comporte deux multiplicateurs de signaux, l'un étant de type inverseur, et un additionneur pour combiner les informations provenant de ces multiplicateurs.

De manière avantageuse, le démodulateur comporte:
■ un premier canal formé du premier multiplicateur,
■ un deuxième canal disposé en parallèle avec le premier canal et comportant le deuxième multiplicateur, ainsi qu'un filtre passe-bas et un circuit d'échantillonnage et de maintien,
■ un additionneur, qui reçoit les signaux des deux canaux et les traite,
■ un amplificateur-filtre, et
■ un comparateur.

Le démodulateur est agencé de manière à ce que les signaux issus de l'additionneur soient traités par l'amplificateur-filtre puis par le comparateur. Ils sont ensuite adressés à l'interface pour délivrer, à la sortie de ce dernier, un signal porteur des informations provenant du transpondeur.

Spécialement lorsque le lecteur est séparé du transpondeur par un écran métallique, il est nécessaire que l'inductance de l'antenne du lecteur soit aussi élevée que possible (de l'ordre de quelques mH), avec une bonne concentration du champ magnétique. Cela peut être obtenu en bobinant l'antenne du lecteur sur un noyau en matériau magnétique doux, en ferrite par exemple.

II faut aussi que la lecture ne soit pas tributaire des problèmes que pourraient engendrer des variations des caractéristiques de l'antenne du lecteur, par exemple sa constante de temps. A cet effet, le lecteur est agencé de manière à ce que le début de la pause se fait par interruption du courant, donc du champ magnétique, lors de son passage par zéro. La tension aux bornes de l'antenne ou du condensateur d'accord est alors maximale et conservée pour le début de la prochaine émission.

Les commandes du lecteur demandent à tout ou partie des transpondeurs présents dans le champ électromagnétique d'envoyer un signal Rx de retour d'identification. Elles se présentent sous forme binaire, avec une série de bits qui se différencient l'un de l'autre par leur durée. Une pause, aussi courte que possible est intercalée entre les bits.

Plus précisément, le lecteur émet te signal Lx, d'amplitude constante, avec un temps de pause T₀ ou T₁, selon qu'il veut envoyer un 0 ou un 1, le rapport entre T₀ et T₁ étant sensiblement égale à 1/2. Les temps de pause sont réduits au minimum, de manière à ce que l'énergie fournie soit maximale et le temps de mesure le plus court possible. L'antenne du transpondeur reçoit le signal Tx, qui est une image amortie du signal Lx, la sinusoïde décroissant, puis croissant progressivement respectivement lors de l'arrêt et du début de l'émission de Lx. Ce temps de pause doit, donc, être suffisant pour que le signal Tx aux bornes de l'antenne du transpondeur soit amorti jusqu'à une tension inférieure à la tension de seuil, afin de permettre au circuit de démodulation de le détecter.

Lorsqu'un écran métallique est susceptible de se trouver entre les antennes du lecteur et du transpondeur, il est préférable de travailler à une fréquence porteuse aussi basse que possible. Il en résulte inévitablement une augmentation de la durée de la pause.

La présente invention a également pour but d'assurer une liaison fiable entre un lecteur et un transpondeur, en un temps de transmission aussi réduit que possible et à même de travailler même avec un écran métallique disposé entre le lecteur et le transpondeur. Elle permet, plus particulièrement, de réduire au minimum la durée de la pause par rapport à celle d'un bit de commande et de rendre indépendantes les caractéristiques des antennes du transpondeur et du lecteur. A cet effet, le lecteur est agencé de manière à ce que le premier signal Tx, généré par le circuit de commande, est formé d'une succession de bits chacun d'eux étant terminé par une pause dont la durée est inférieure ou égale à six périodes du signal sinusoïdal.

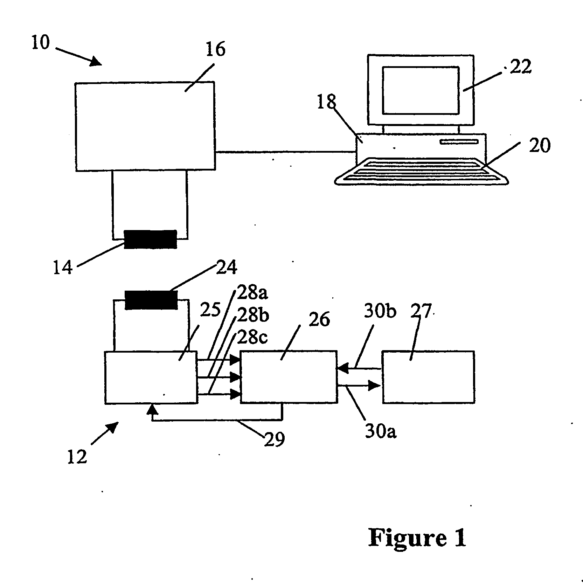

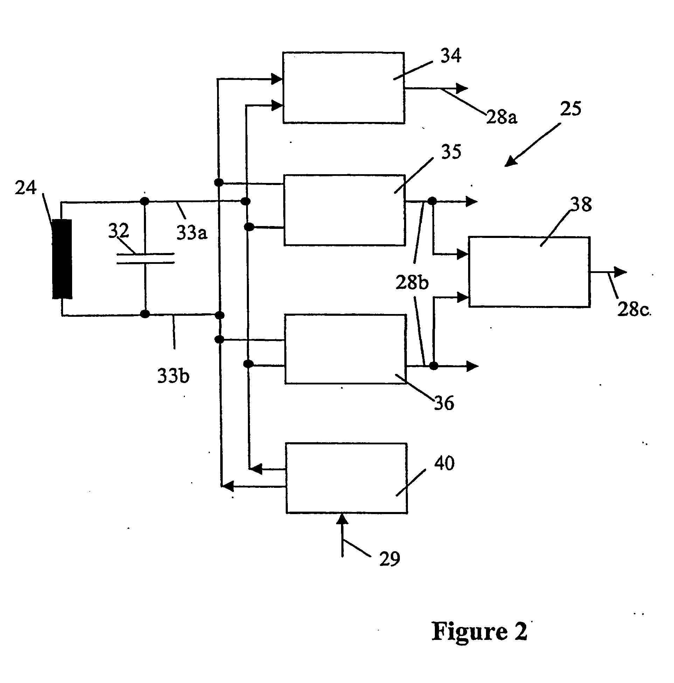

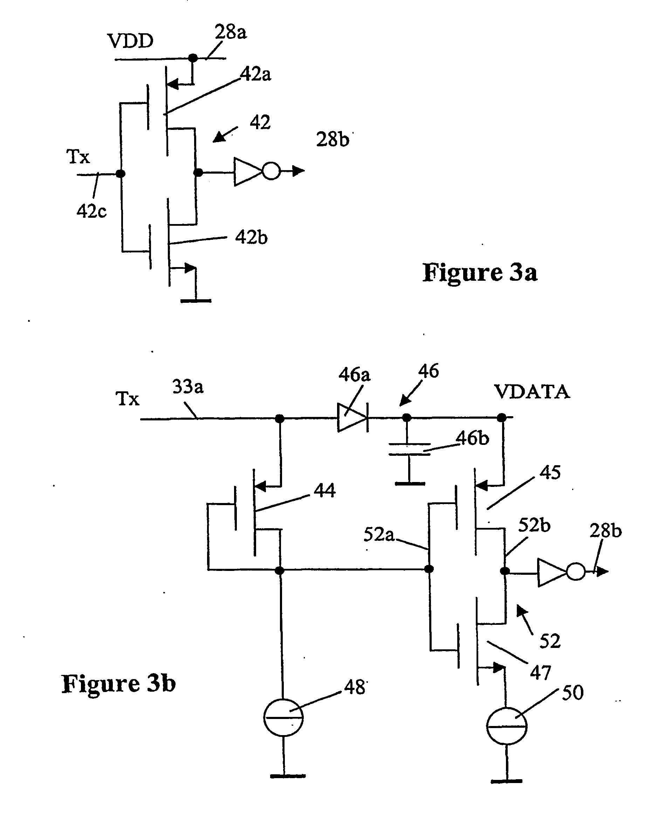

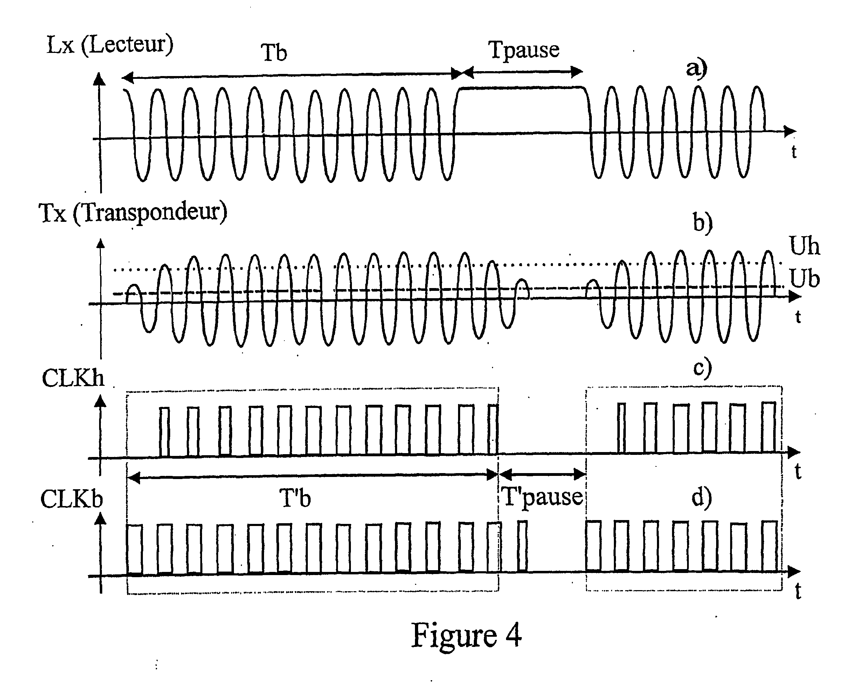

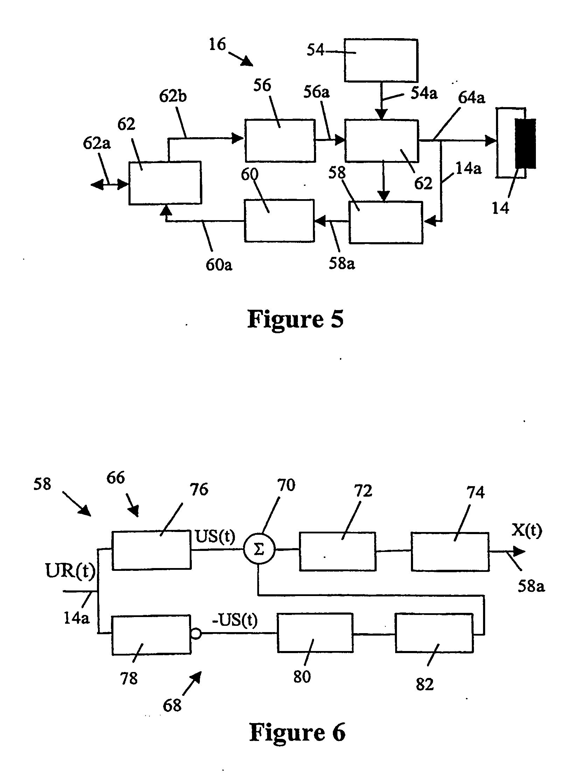

D'autres avantages et caractéristiques de l'invention ressortiront de la description qui va suivre, faite en regard du dessin annexé, dans lequel:
■ La figure 1 représente, schématiquement, un transpondeur et un lecteur destiné à identifier le transpondeur;
■ La figure 2 montre une partie du transpondeur de la figure 1, et plus particulièrement son circuit analogique;
■ La figure 3 illustre respectivement en a et en b, les schémas d'extracteurs bas et haut,
■ La figure 4 montre, respectivement, sur les lignes a à d, les courbes de la tension mesurée aux bornes de l'antenne du lecteur, de l'antenne du transpondeur et des signaux d'horloge haut et bas.
■ La figure 5 représente, de manière schématique, un lecteur selon l'invention, dont une partie est illustrée de façon plus détaillée sur la figure 6.

L'ensemble, représenté à la figure 1, comporte un lecteur 10 et un transpondeur 12. Le lecteur 10 comprend plus précisément une antenne 14 émettant un signal électromagnétique Lx, une électronique de commande 16, avantageusement un microcontrôleur, ainsi qu'un ordinateur 18 relié à un clavier 20 et à un écran 22.

Le transpondeur 12 est formé d'une antenne 24, d'un circuit analogique 25, d'un circuit logique de commande 26 et d'une mémoire 27. Le circuit analogique 25, qui sera décrit de manière plus détaillée ci-après, est relié à l'antenne, pour recevoir le signal que capte cette dernière. Ce signal assure trois fonctions, soit:
■ L'alimentation électrique du transpondeur,
■ La fourniture d'un signal d'horloge, et
■ La transmission des commandes.

Après traitement, le signal est transmis du circuit analogique 25 au circuit logique 26, par trois liaisons 28a, 28b et 28c, assurant respectivement la transmission de l'énergie, de l'horloge et la fonction d'entrées sérielles. Le circuit logique 26 adresse des informations au circuit analogique 25, par la liaison 29 de type "sorties sérielles". II introduit et va chercher des informations dans la mémoire 27, respectivement par les liaisons 30a et 30b.

Les commandes sont traitées par le circuit logique 26 à partir des informations reçues et de celles contenues dans la mémoire 27. Une réponse est adressée, par le circuit logique 26, au circuit analogique 25 pour qu'il envoie un signal de retour vers le lecteur 10.

Comme le montre la figure 2, le circuit analogique 25 comporte un condensateur 32, un convertisseur de courant alternatif en courant continu 34, un extracteur d'horloge bas 35 et un extracteur d'horloge haut 36, un démodulateur 38 et un modulateur 40.

Le condensateur 32 forme, avec l'antenne 24, un circuit résonnant dont la fréquence propre est ajustée sur la fréquence du signal Lx émis par le lecteur 10, et aux bornes duquel sont reliées, par les liaisons 33a et 33b, les entrées du convertisseur 34, des extracteurs 35 et 36, et les sorties du modulateur 40, de sorte que le signal reçu par le transpondeur est appliqué à chacun d'eux et que le signal transmis par le transpondeur est appliqué à l'antenne. Le démodulateur 38 reçoit, de l'antenne 24, son énergie au travers du convertisseur 34, et l'horloge et les commandes au travers des extracteurs 35 et 36.

On retrouve, sur cette figure, la liaison 28a d'alimentation, la liaison 28b d'horloge et la liaison 28c des entrées sérielles, formant les sorties du circuit analogique 25. On remarque également la liaison 29, entrées sérielles, qui permet d'adresser des informations du circuit logique 26 au circuit analogique 25 et plus particulièrement à son modulateur 40.

Le convertisseur 34 est, de manière bien connue de l'homme du métier, formé d'un redresseur à doubles alternances avec un grand condensateur d'énergie, alimentant un stabilisateur de tension. Il assure l'alimentation de l'ensemble des parties du transpondeur 12.

L'extracteur de type bas est réalisé au moyen de deux inverseurs simples 42 et 43 en série, comme représenté sur la figure 3a. L'inverseur 42 est formé d'un transistor PMOS 42a et d'un transistor NMOS 42b. II est alimenté par une tension stabilisée VDD fournie par le convertisseur 34. L'antenne 24 applique le signal Tx à son entrée 42c. Les dimensions des transistors 42a et 42b sont calculées de manière à ce que la tension de seuil Ub à laquelle commute le circuit, soit voisine de 1V.

Un tel extracteur génère un signal d'horloge chaque fois que Tx est supérieur à 1V, ce signal s'interrompant lorsque Tx descend en dessous de ce niveau. En conséquence, le signal d'horloge s'interrompt.

Dans des conditions normales de fonctionnement, la tension de crête Txₘₐₓ est généralement de l'ordre d'une dizaine de volts. Avec un facteur de qualité de l'antenne compris entre 15 et 30, il faut environ 3 à 6 cycles après la pause pour que la tension Tx soit en permanence en dessous de 1V.

Il serait certes possible de dimensionner les transistors de manière à ce que la tension de seuil Ub soit plus élevée. Dans ce cas, toutefois, le transpondeur ne peut plus réagir normalement lorsque le signal reçu est voisin de Ub. Cela réduit, en conséquence, sa sensibilité.

La figure 3b représente, de manière plus détaillée, l'extracteur de type haut 36. Il est formé d'un transistor d'entrée 44, de type PMOS et d'un redresseur de valeur de crête 46, tous les deux reliés à l'antenne par la ligne 33a, de deux sources de courant 48 et 50 et de deux inverseurs 52 et 53, l'un 52 étant polarisé, l'autre 53 simple.

Plus précisément, le redresseur de valeur de crête 46 est formé d'une diode 46a et d'un condensateur 46b. Son entrée est reliée à l'antenne 24 par la liaison 33a et sa sortie 46c à l'inverseur 52 pour y appliquer une tension VData égale à la tension de crête Txₘₐₓ du signal reçu par l'antenne au travers de la liaison 33a.

L'inverseur 52 comporte une entrée 52a et une sortie 52b, et deux transistors PMOS 52c et NMOS 52d. L'entrée 52a est reliée à l'antenne 24 au travers du transistor 44 qui décale la tension de l'antenne vers le bas d'une valeur égale à sa tension de seuil. Le seuil de détection Uh de l'extracteur haut est décalé vers le bas par rapport à VData d'une valeur égale à la différence des tensions de seuil des transistors PMOS 44 et 52c. Ces derniers sont dimensionnés de manière telle que la tension de seuil du transistor 52c soit de quelques centaines de mV plus élevée que la tension de seuil du transistor 44. De la sorte, le signal d'horloge est interrompu dès que la tension du signal Tx reçu par l'antenne chute d'une valeur égale à la différence entre les deux tensions de seuil, quelle que soit la valeur de la tension de crête Txₘₐₓ.

Pour bien comprendre le fonctionnement des extracteurs d'horloge, la figure 4 représente respectivement sur les lignes a, b, c et d, le signal Lx émis par l'antenne 14 du lecteur, celui Tx reçu par le transpondeur 12, ainsi que les signaux d'horloge haut CLKh et bas CLKb.

Sur la ligne a, on constate que l'antenne du lecteur émet un signal sinusoïdal, qui s'interrompt périodiquement, quand la tension est maximale.

Lorsque la tension du signal Lx devient constante, le signal Tx aux bornes de l'antenne 24 du transpondeur 12 décroît, comme on peut le voir sur la ligne b, plus ou moins rapidement, la vitesse étant d'autant plus faible que le facteur de qualité est élevé. La tension de crête Txₘₐₓ est d'autant plus élevée que le signal reçu est élevé. Toutefois, lorsque la tension dépasse une valeur limite, le signal est saturé.

Au début d'un signal Lx émis par le lecteur, les extracteurs de signaux d'horloge haut 36 et bas 35 répondent tous les deux très rapidement, comme on peut le voir sur les lignes c et d. Par contre, dans de mauvaises conditions de réception, le signal d'horloge haut CLKh peut n'apparaître qu'après plusieurs périodes du signal Lx émis par le lecteur. Lorsque le lecteur 10 interrompt l'émission du signal sinusoïdal, on constate que le signal Tx reçu par l'antenne 24 s'amortit lentement. Cela provient du fait que le facteur de qualité du circuit oscillant, qu'elle forme avec le condensateur 32, est élevé.

A cause de cet amortissement lent, il faut plusieurs périodes avant que l'extracteur bas 35 ne réagisse, alors que le signal CLKh issu de l'extracteur haut 36 s'interrompt en synchronisme.

Il apparaît ainsi clairement que dans les cas où le signal reçu est régulier et intense, il suffit de disposer d'un extracteur haut dans le transpondeur pour pouvoir réduire considérablement le temps de pause. Par contre, lorsque le signal reçu ne sature pas, il est alors souhaitable de disposer d'extracteurs haut et bas, ce qui permet alors de garantir une pause de durée très courte. Il est ainsi possible de transmettre le maximum d'énergie et un nombre important d'informations même lorsque la fréquence de la porteuse est basse.

Les figures 5 et 6 montrent, de manière plus détaillée la structure de l'électronique de commande 16 équipant le lecteur 10.

L'électronique de commande 16 est formée d'une base de temps 54, d'un modulateur 56, d'un démodulateur 58, d'un décodeur 60, d'une interface de communication 62 et d'un circuit de commande 64.

La base de temps 54 est reliée au circuit de commande 64, par une liaison 54a, au travers de laquelle il délivre un signal sinusoïdal de fréquence constante, avantageusement comprise entre 9 et 150 kHz, qui sert de porteuse. Le circuit de commande 64 reçoit du modulateur 56, par une liaison 56a, des informations qui lui permettent de moduler le signal de la porteuse pour adresser des informations vers un transpondeur disposé dans le voisinage du lecteur, par l'intermédiaire de l'antenne 14 qui est reliée au circuit de commande 64 au moyen d'une liaison 64a.

L'antenne 14 est reliée au démodulateur 58 par une liaison 14a. Ainsi, lorsque le transpondeur répond aux informations du lecteur, le signal qu'il adresse, capté par l'antenne 14, est reçu par le démodulateur 58, au travers de la liaison 14a. Ce signal est traité par le démodulateur 58 et les informations qu'il contient sont adressées au décodeur 60 au travers d'une liaison 58a. Le décodeur 60 interprète ces informations sur la base de données en mémoires et les transmet à l'interface 62 au travers d'une liaison 60a. L'interface 62 est relié à l'extérieur, par une liaison 62a, formée par exemple d'une ligne RS 232, pour assurer la transmission de commandes et d'informations vers des interfaces homme-machine. Il est également relié au modulateur 56, par une liaison 62b.

Ainsi, lorsqu'un opérateur souhaite identifier un objet muni d'un transpondeur et disposé dans le champ du lecteur 10, il donne un ordre au moyen du clavier 20. Cet ordre est géré par l'ordinateur 18 et envoyé à l'électronique de commande 16 au travers de la liaison 62a. L'interface 62 adresse cet ordre au modulateur 56. Ce dernier coopère avec le circuit de commande 64 pour moduler le signal de la porteuse issu de la base de temps 54.

Comme cela a déjà été relevé plus haut, il est difficile de lire les signaux reçus par l'antenne 14, car ils sont de très faible niveau. Le démodulateur 58, représenté de manière détaillée à la figure 6, permet d'assurer une lecture efficace. II comprend des premier et deuxième canaux 66 et 68, disposés en parallèle, un additionneur 70 relié aux sorties des canaux 66 et 68, un amplificateur-filtre 72 et un comparateur 74 disposés en série à la sortie de l'additionneur 70.

Le canal 66 est formé d'un multiplicateur 76. Le canal 68 comporte un multiplicateur de type inverseur 78, un filtre passe-bas 80 et un circuit d'échantillonnage 82.

Les deux canaux 66 et 68 sont reliés ensemble à l'antenne par la liaison 14a. Ils reçoivent donc, tous les deux, le signal UR(t) provenant de l'antenne 14. Ce signal modulé comporte deux composantes, l'une correspondant au signal émis et l'autre au signal capté, provenant du transpondeur. Le décodeur 58 a pour fonction d'extraire le signal X(t) qui correspond à la composante provenant du transpondeur.

Dans une première opération, le signal est multiplié par lui-même par les multiplicateurs 76 et 78, ce dernier inversant en outre le signal résultant. En d'autres termes, le signal US(t) issu du multiplicateur 76 est égal au carré de UR(t), alors que celui issu du multiplicateur 78 est égal, mais de signe inversé.

Le signal -US(t), issu du multiplicateur 78, est ensuite traité, de manière classique, au moyen du filtre passe-bas 80, puis par le circuit d'échantillonnage 82.

Dans le dispositif tel que décrit, le lecteur 16 est maître en regard du transpondeur. En d'autres termes, le lecteur peut savoir à tout moment quand un transpondeur est susceptible de répondre à une interrogation. Juste avant que ne commence le signal de réponse, le circuit d'échantillonnage 82 mémorise la valeur moyenne du signal -US(t - Δt) fournie par le filtre 80. C'est ce signal mémorisé qui est additionné au signal US(t). Le résultat de cette addition permet, après amplification et filtrage par l'amplificateur-filtre 72, puis comparaison par le comparateur 74, d'extraire X(t), qui comporte toutes les informations issues du transpondeur, alors que le signal provenant de la porteuse a été éliminé.

Il est bien évident que le transpondeur et le lecteur tels qu'ils ont été décrits peuvent faire l'objet de nombreuses variantes, sans pour autant sortir du cadre de l'invention.

Ainsi, bien que la fréquence porteuse soit relativement basse, et grâce aux caractéristiques du lecteur selon l'invention, utilisé avec des transpondeurs tels que décrits, il est possible de lire des transpondeurs passifs dans des conditions particulièrement défavorables, même au travers d'un écran métallique, de manière sûre et rapide.

## Revendications

1. Lecteur (10), pour l'identification de transpondeurs passifs (12) du type comportant une antenne pour recevoir un premier signal (Tx) du lecteur et pour émettre un deuxième signal (Rx), comportant:
- une base de temps (54), générant un signal sinusoïdal,
- un circuit de commande (64),
- un modulateur (56) pour transmettre au circuit de commande (64) les informations en vue de moduler le signal sinusoïdal dans le but de générer un signal porteur de commandes qui, reçu par l'antenne dudit transpondeur, forme ledit premier signal (Tx),
- un démodulateur (58),
- un décodeur (60),
- une interface de communication (62), et
- une antenne (14),
**caractérisé en ce que** ledit démodulateur (60), qui est relié à l'antenne (14) pour recevoir le deuxième signal (Rx), comporte deux multiplicateurs (76, 78), l'un (78) étant de type inverseur, et un additionneur (70) agencé pour combiner les informations provenant desdits multiplicateurs (76, 78).

2. Lecteur selon la revendication 1, **caractérisé en ce que** ledit démodulateur (58) comporte, en outre:
- un premier canal (66) formé du premier multiplicateur (76),
- un deuxième canal (68) disposé en parallèle avec ledit premier canal (66) et comportant le deuxième multiplicateur (78), ainsi qu'un filtre passe-bas (80) et un circuit d'échantillonnage et de maintien (82),
- un amplificateur-filtre (72), et
- un comparateur (74),
ledit démodulateur (58) étant agencé de manière à ce que les premier (66) et deuxième (68) canaux sont reliés audit additionneur (70) et que les signaux issus de l'additionneur (70) sont traités par l'amplificateur-filtre (72) puis par le comparateur (74) et adressés à ladite interface (62) pour délivrer, à la sortie de cette dernière, une information décodée provenant dudit transpondeur (12).

3. Lecteur selon l'une des revendications 1 et 2, **caractérisé en ce que** ladite antenne est formée d'une bobine enroulée sur un noyau en matériau magnétique doux.

4. Lecteur selon l'une des revendications 1 à 3, **caractérisé en ce qu'**il est agencé de manière à ce que la pause du signal (Lx) se fait par interruption du courant lors de son passage par zéro.

5. Lecteur selon l'une des revendications 1 à 4, **caractérisé en ce qu'**il est agencé de manière à ce que ledit premier signal (Tx), généré par le circuit de commande, est formé d'une succession de bits entre chacun desquels une pause est intercalée, la durée de la pause étant inférieure ou égale à six périodes du signal sinusoïdal.

## Claims

1. Reader (10) for identifying passive transponders (12) of the type including an antenna for receiving a first signal (Tx) from the reader and for transmitting a second signal (Rx), including:
■ a time base (54) generating a sinusoidal signal,
■ a control circuit (64),
■ a modulator (56) for transmitting the data to the control circuit (64) for the purpose of modulating the sinusoidal signal in order to generate a signal carrying commands which, received by the antenna of said transponder, forms said first signal (Tx),
■ a demodulator (58),
■ a decoder (60),
■ a communication interface (62), and
■ an antenna (14),
**characterized in that** said demodulator (60), which is connected to the antenna (14) to receive the second signal (Rx), includes two multipliers (76, 78), one (78) being of the inverter type, and an adder (70) arranged for combining the data originating from said multipliers (76, 78).

2. Reader according to claim 1, **characterized in that** said demodulator (58) further includes:
■ a first channel (66) formed of the first multiplier (76),
■ a second channel (68) arranged in parallel with said first channel (66) and including the second multiplier (78), as well as a low pass filter (80) and a sampling and hold circuit (82),
■ an amplifier-filter (72), and
■ a comparator (74),
said demodulator (58) being arranged such that the first (66) and second (68) channels are connected to said adder (70) and that the signals derived from the adder (70) are processed by the amplifier-filter (72) then by the comparator (74) and addressed to said interface (62) to deliver, at the output thereof, a decoded item of data originating from said transponder (12).

3. Reader according to claims 1 or 2, **characterized in that** said antenna is formed of a coil wound around a core of soft magnetic material.

4. Reader according to any of claims 1 to 3, **characterized in that** it is arranged such that the signal (Lx) pause occurs by interrupting the current during its zero crossing.

5. Reader according to any of claims 1 to 4, **characterized in that** it is arranged such that said first signal (Tx), generated by the control circuit, is formed of a succession of bits between each of which a pause is inserted, the duration of the pause being less than or equal to six periods of the sinusoidal signal.

## Patentansprüche

1. Leser (10) für die Erkennung passiver Transponder (12) der Art, die eine Antenne zum Empfangen eines ersten Signals (Tx) des Lesers und zum Senden eines zweiten Signals (Rx) aufweist, der Folgendes umfasst:
- eine Zeitbasis (54), die ein sinusförmiges Signal erzeugt,
- eine Steuerschaltung (64),
- einen Modulator (56) zum Übertragen von Informationen bezüglich des Modulierens des sinusförmigen Signals auf die Steuerschaltung (64), um ein Signal zu erzeugen, das Befehle enthält und das über die Antenne des Transponders empfangen wird und das erste Signal (Tx) darstellt,
- einen Demodulator (58),
- einen Decodierer (60),
- eine Kommunikationsschnittstelle (62) und
- eine Antenne (14),
**dadurch gekennzeichnet, dass**
der Demodulator (60), der zum Empfangen des zweiten Signals (Rx) mit der Antenne (14) verbunden ist, zwei Multiplikatoren (76, 78), von denen einer (78) ein Inverter ist, und einen Addierer (70) umfasst, der eingerichtet ist, um die von den Multiplikatoren (76, 78) stammenden Informationen zu kombinieren.

2. Leser nach Anspruch 1, **dadurch gekennzeichnet, dass** der Demodulator (58) außerdem Folgendes enthält:
- einen durch den ersten Multiplikator (76) gebildeten ersten Kanal (66),
- einen parallel zu dem ersten Kanal (66) angeordneten zweiten Kanal (68), der den zweiten Multiplikator (78) sowie einen Tiefpassfilter (80) und eine Abtast- und Halteschaltung (82) umfasst,
- einen Verstärkerfilter (72) und
- einen Vergleicher (74),
wobei der Demodulator (58) so eingerichtet ist, dass der erste Kanal (66) und der zweite Kanal (68) mit dem Addierer (70) verbunden sind und die von dem Addierer (70) ausgegebenen Signale von dem Verstärkerfilter (72) und dann von dem Vergleicher (74) behandelt und an die Schnittstelle (62) gerichtet werden, um an den Ausgang der Schnittstelle (62) eine von dem Transponder (12) stammende decodierte Information zu liefern.

3. Leser nach einem der Ansprüche 1 und 2, **dadurch gekennzeichnet, dass** die Antenne aus einer um einen Kern aus weichmagnetischem Material gewickelten Spule gebildet wird.

4. Leser nach einem der Ansprüche 1 bis 3, **dadurch gekennzeichnet, dass** er dergestalt eingerichtet ist, dass sich die Signalpause (Lx) in einer Stromunterbrechung während seines Nulldurchgangs ausdrückt.

5. Leser nach einem der Ansprüche 1 bis 4, **dadurch gekennzeichnet, dass** er dergestalt eingerichtet ist, dass das von der Steuerschaltung erzeugte erste Signal (Tx) aus einer Bitfolge besteht, wobei zwischen den Bits eine Pause geschaltet ist, deren Dauer geringer oder gleich sechs Perioden des sinusförmigen Signals ist.
